# EUROPÄISCHE PATENTANMELDUNG

(11) **EP 4 764 180 A1**
(43) Veröffentlichungstag der Anmeldung: **24.06.2026**
(21) Anmeldenummer: 25217433.9
(22) Anmeldetag: 20.11.2025
(51) Int. Cl.: F02B 37/02, F02B 37/16, F02B 37/22

(54) **BERNNKRAFTMASCHINE MIT ABSPERRBARER FLUT ZUR DREHMOMENTSTEIGERUNG**

(30) Priorität: 18.12.2024 DE 102024004298
(71) Anmelder: MAN Truck & Bus SE, 80995 München (DE)
(72) Erfinder: Malischewski, Thomas, 80995 München (DE); Zundel, Martin, 80995 München (DE); Hyna, Dominic, 80995 München (DE)

(57) **Zusammenfassung**

Die Erfindung betrifft eine Brennkraftmaschine (100). Die Brennkraftmaschine (100) weist eine Turboladereinrichtung (10) auf, die eine Turbine (12) und einen mit der Turbine (12) trieblich gekoppelten Verdichter (14) aufweist, wobei die Turbine (12) eine erste Flut (12a) und eine zweite Flut (12b) aufweist. Die Brennkraftmaschine (100) weist ferner eine Abgassammelleitung (20) auf, die die erste Flut (12a) und die zweite Flut (12b) mit mehreren Zylindern (2) der Brennkraftmaschine (100) miteinander fluidisch verbindet. Weiterhin weist die Brennkraftmaschine (100) eine Abgasleiteinrichtung (30) auf, mittels derer ein erster Abgasstrom durch die erste Flut (12a) unabhängig von einem zweiten Abgasstrom durch die zweite Flut (12a) einstellbar ist. Schließlich weist die Brennkraftmaschine (100) eine Bypass-Leitung (40) auf, über die von dem Verdichter (14) verdichtete Luft unter Umgehung der mehreren Zylinder (2) der Turbine (12) zuführbar ist.

## Beschreibung

Die Erfindung betrifft eine Brennkraftmaschine sowie ein Wasserfahrzeug und ein Kraftfahrzeug mit jeweils einer solchen Brennkraftmaschine sowie ein Verfahren zum Betreiben der Brennkraftmaschine.

Der Betrieb von Schiffsmotoren erfordert in der Regel ein ausreichend hohes Drehmoment über den gesamten Drehzahlbereich zur Beschleunigung. Dies erfordert meist, dass auch bei Drehzahlen unter 1300 U/min ein ausreichendes Drehmoment zur Verfügung steht.

Eine Erhöhung der Nennleistung von Schiffsmotoren hat in der Regel den Einsatz eines größeren Propellers zur Folge. Damit steigt aber nicht nur der Leistungsbedarf im Nennbetrieb, sondern auch im unteren Drehzahlbereich (z. B. unter 1300 U/min). Das bedeutet, dass mit steigender Leistung auch der Bereich des maximalen Drehmoments größer werden muss. Dies hat zur Folge, dass der Verdichter von der Pumpgrenze bis zur Stopfgrenze betrieben wird. Dementsprechend besteht ein Bedarf, die Spreizung zwischen Pump- und Stopfgrenze zu maximieren.

Bisherige Ansätze, um den Schiffsmotor in einem möglichst breiten Drehzahlband betreiben zu können, basieren oftmals auf einer mehrstufigen Aufladung, bei der z. B. zwei Turbolader in Reihe geschaltet werden. Darüber hinaus besteht die Möglichkeit, die Pumpgrenze im unteren Drehzahlbereich durch elektrisch oder mechanisch angetriebene Zusatzverdichter zu umgehen. Beide Varianten sind jedoch konstruktiv aufwendig und auch sehr kostenintensiv.

Auch der Einsatz von VTG-Abgasturboladern mit variabler Turbinengeometrie erweist sich aufgrund der salzhaltigen Umgebung, aufgrund von Schlackenablagerungen bei Schwerölbetrieb und aufgrund der oftmals langen Standzeiten bei Wasserfahrzeugen und der damit verbundenen Verschleißanfälligkeit ebenfalls als nicht praktikabel.

Aufgabe der Erfindung ist es, eine verbesserte Möglichkeit bereitzustellen, die es ermöglicht, eine Brennkraftmaschine in einem möglichst breiten Drehzahlband mit ausreichend Drehmoment zu betreiben. Bevorzugt ist es Aufgabe der Erfindung, eine einfache und robuste Möglichkeit bereitzustellen, mittels derer eine Leistungssteigerung einer Brennkraftmaschine im Vergleich zu den bisherigen Lösungen, insbesondere in einem Drehzahlbereich unter 1300 U/min, ermöglicht wird.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Ein erster unabhängiger Aspekt der vorliegenden Offenbarung betrifft eine (z. B. Mehrzylinder-)Brennkraftmaschine. Beispielsweise kann die Brennkraftmaschine eine Diesel- und/oder Viertakt-Brennkraftmaschine sein. Bevorzugt ist die Brennkraftmaschine eine Brennkraftmaschine für ein Wasserfahrzeug (z. B. ein Schiff).

Die Brennkraftmaschine weist eine (z. B. Abgas-)Turboladereinrichtung auf, die eine (z. B. Abgas-)Turbine (z. B. eine Radialturbine) und einen mit der Turbine trieblich gekoppelten (z. B. Frischluft-)Verdichter (z. B. einen Radialverdichter) aufweist. Entsprechend kann die Brennkraftmaschine eine aufgeladene und/oder aufladbare Brennkraftmaschine sein. Die Turbine weist dabei eine erste Flut und eine zweite Flut auf. Beispielsweise kann die Turbine eine zweiflutige Turbine sein.

Die Brennkraftmaschine weist ferner eine (z. B. einflutige) Abgassammelleitung (z. B. einen Abgaskrümmer) auf. Die Abgassammelleitung verbindet dabei die erste Flut und die zweite Flut der Turbine mit mehreren Zylindern der Brennkraftmaschine fluidisch miteinander. Beispielsweise können über die Abgassammelleitung Abgase der mehreren Zylinder gesammelt und der ersten und zweiten Flut zuführbar sein.

Die Brennkraftmaschine weist ferner eine Abgasleiteinrichtung (z. B. mit einem Klappenmechanismus) auf. Bevorzugt ist mittels der Abgasleiteinrichtung ein erster Abgasstrom durch die erste Flut unabhängig von einem zweiten Abgasstrom durch die zweite Flut einstellbar. Beispielsweise kann mittels der Abgasleiteinrichtung eine jeweils der ersten und zweiten Flut zugeführte Menge an Abgas veränderbar sein. Besonders bevorzugt ist mittels der Abgasleiteinrichtung der erste Abgasstrom unabhängig vom zweiten Abgasstrom so einstellbar, dass mittels der Abgasleiteinrichtung (z. B. nur oder gezielt) der erste Abgasstrom drosselbar oder blockierbar ist, z. B. um dadurch eine Strömungsgeschwindigkeit des zweiten Abgasstroms (und somit eine Leistung der Turboladereinrichtung) zu erhöhen.

Die Brennkraftmaschine weist ferner eine (z. B. absperrbare) Bypass-Leitung (z. B. eine Bypass-Rohrleitung und/oder Bypass-Schlauchleitung) auf. Über die Bypass-Leitung ist bevorzugt von dem Verdichter verdichtete (z. B. Frisch-)Luft (z. B. ein Teil der vom Verdichter verdichteten Luft) - unter Umgehung der mehreren Zylinder - der Turbine, vorzugsweise deren erster Flut (z. B. nur deren erster Flut), zuführbar. Beispielsweise kann die Bypass-Leitung (z. B. nur) in die erste Flut und/oder in einen der ersten Flut zugeordneten Abschnitt der Abgassammelleitung münden. Über die Bypass-Leitung kann ein zusätzlicher Massen- bzw. Luftstrom zur Turbine, insbesondere in die mittels der Abgasleiteinrichtung gedrosselte oder blockierte erste Flut, geschaffen werden. Bevorzugt dient die Bypass-Leitung dabei dazu, einen stabilen Betriebspunkt der Turboladereinrichtung unterhalb einer Pumpgrenze der Turboladereinrichtung zu realisieren.

Insgesamt wird dadurch eine Brennkraftmaschine bereitgestellt, die es auf vorteilhafte Weise ermöglicht, bei niedrigen Durchsätzen, z. B. in einem Drehzahlbereich der Brennkraftmaschine unter 1300 U/min, durch Drosseln oder Blockieren der ersten Flut die Strömungsgeschwindigkeit des Abgasstroms in der zweiten Flut und damit die Leistung der Turboladereinrichtung zu steigern. Die Bypass-Leitung verhindert dabei auf vorteilhafte Weise, dass die Turbine in die Pumpgrenze fährt, und erleichtert zudem ein Beschleunigen des Verdichters. Im Vergleich zu Konzepten mit mehrstufiger Aufladung oder Zusatzverdichtern ist die vorgeschlagene Lösung konstruktiv einfacher und bauraumsparender zu realisieren und eignet sich aufgrund ihrer Zuverlässigkeit und Robustheit insbesondere für einen Einsatz bei Wasserfahrzeugen.

Nach einem ersten Aspekt kann jeder der mehreren Zylinder über die Abgassammelleitung sowohl mit der ersten Flut als auch mit der zweiten Flut fluidisch verbunden und/oder verbindbar sein. Bevorzugt verbindet die (z. B. einflutige) Abgassammelleitung dabei alle Zylinder der Brennkraftmaschine fluidisch sowohl mit der ersten Flut als auch mit der zweiten Flut, vorzugsweise so, dass Abgas eines jeden Zylinders der Brennkraftmaschine zur ersten und zweiten Flut strömen kann.

Zudem oder alternativ kann die Abgassammelleitung ausgebildet sein, Abgase aus allen der mehreren Zylinder zusammenzuführen und die zusammengeführten Abgase der ersten und zweiten Flut zuzuführen. Beispielsweise kann die Abgassammelleitung mehrere Abgassammelleitungseingänge aufweisen, die jeweils mit einem Ausgang jedes der mehreren Zylinder fluidisch verbunden sind, und einen gemeinsamen Abgassammelleitungsausgang, der mit einem Eingang der ersten Flut (z. B. einem ersten Fluteneinlass) und einem Eingang der zweiten Flut (z. B. einem zweiten Fluteneinlass) fluidisch verbunden ist.

Gemäß einem weiteren Aspekt kann die Abgasleiteinrichtung (z. B. nur) ein Absperrelement zum Drosseln und/oder Blockieren des ersten Abgasstroms aufweisen. Beispielsweise kann das Absperrelement eine Klappe, einen Schieber und/oder ein Ventil aufweisen und/oder als eine Klappe, ein Schieber und/oder ein Ventil ausgebildet sein. Lediglich beispielhaft kann es sich bei dem Absperrelement um eine modifizierte Staudruckklappe einer Motorbremse der Brennkraftmaschine handeln. Bevorzugt ist das Absperrelement in der ersten Flut oder stromauf zur ersten Flut (z. B. unmittelbar an oder vor einem Einlass der ersten Flut) angeordnet. Auf vorteilhafte Weise kann dadurch auf besonders einfache Weise ein entsprechendes Drosseln bzw. Blockieren des ersten Abgasstroms erreicht werden.

In einer Ausführungsform kann die Abgasleiteinrichtung keine weiteren Absperrelemente (z. B. weitere Klappen, Schieber und/oder Ventile) aufweisen. Bevorzugt weist die Abgasleiteinrichtung somit ausschließlich das vorgenannte Absperrelement auf. Zudem oder alternativ kann der zweite Abgasstrom nicht mittels eines weiteren Absperrelements drosselbar oder blockierbar sein. Auf vorteilhafte Weise kann dadurch ebenfalls eine besonders einfache Drosselung bzw. Blockierung des ersten Abgasstroms erreicht werden.

In einer anderen Ausführungsform kann die Abgasleiteinrichtung ein weiteres Absperrelement zum Drosseln und/oder Blockieren des zweiten Abgasstroms aufweisen. Beispielsweise kann das weitere Absperrelement eine Klappe, einen Schieber und/oder ein Ventil aufweisen und/oder als eine Klappe, ein Schieber und/oder ein Ventil ausgebildet sein. Bevorzugt ist das weitere Absperrelement in der zweiten Flut oder stromauf zur zweiten Flut (z. B. unmittelbar an oder vor einem Einlass der zweiten Flut) angeordnet. Entsprechend können jeweils der erste Abgasstrom über das, auch als "erstes" Absperrelement bezeichenbare, Absperrelement und der zweite Abgasstrom über das, auch als "zweite" Absperrelement bezeichenbare, weitere Absperrelement drosselbar und/oder blockierbar sein. Bevorzugt sind das (erste) Absperrelement und das weitere (bzw. zweite) Absperrelement dabei unabhängig voneinander betätigbar. Beispielsweise kann wahlweise nur der erste oder der zweite Abgasstrom über das jeweilige Absperrelement drosselbar und/oder blockierbar sein. Auf vorteilhafte Weise können dadurch die Einstellungsmöglichkeiten der Abgasleiteinrichtung erhöht werden.

Nach einem weiteren Aspekt weist die Bypass-Leitung (z. B. an einem ersten Ende der Bypass-Leitung) einen Bypass-Einlass (z. B. eine Rohr- und/oder Schlauchöffnung) auf, wobei der Bypass-Einlass (z. B. direkt) mit dem Verdichter oder (z. B. direkt) mit einer stromauf des Verdichters angeordneten Ladeluftleitung der Brennkraftmaschine fluidisch verbunden sein kann. Beispielsweise kann der Bypass-Einlass (z. B. direkt) mit einem Bereich der Ladeluftleitung zwischen dem Verdichter und einem Ladeluftkühler der Brennkraftmaschine fluidisch verbunden sein. Über den Bypass-Einlass kann die Bypass-Leitung somit bspw. (z. B. direkt) in den Verdichter oder (z. B. direkt) in die Ladeluftleitung münden. Zudem oder alternativ kann die Bypass-Leitung (z. B. an einem, dem ersten Ende entgegengesetzten zweiten Ende der Bypass-Leitung) einen Bypass-Auslass (z. B. eine Rohr- und/oder Schlauchöffnung) aufweisen, wobei der Bypass-Auslass (z. B. direkt) mit der ersten Flut oder (z. B. direkt) mit einem der ersten Flut zugeordneten Abschnitt der Abgassammelleitung (z. B. mit einem, der ersten Flut zugeordneten ersten Verzweigungsabschnitt der Abgassammelleitung) fluidisch verbunden sein kann. Bevorzugt ist der Bypass-Auslass dabei stromab der Abgasleiteinrichtung, z. B. stromab des Absperrelements, (z. B. direkt) mit der ersten Flut oder (z. B. direkt) mit dem der ersten Flut zugeordneten Abschnitt der Abgassammelleitung fluidisch verbunden. Beispielsweise kann der Bypass-Auslass stromab der Abgassammelleitung und stromauf eines Turbinenrads der Turbine (z. B. direkt) in die erste Flut oder (z. B. direkt) in den der ersten Flut zugeordneten Abschnitt der Abgassammelleitung münden. Auf vorteilhafte Weise kann dadurch eine zuverlässige Luftzufuhr zur Turbine sichergestellt werden.

Gemäß einem weiteren Aspekt kann die Bypass-Leitung ausgebildet und/oder angeordnet sein, vom Verdichter verdichtete Luft (bzw. einen Teil hiervon) ausschließlich (z. B. direkt) in den ersten Abgasstrom einzuleiten. Beispielsweise kann die Bypass-Leitung ausgebildet sein, vom Verdichter verdichtete Luft (bzw. einen Teil hiervon) ausschließlich (z. B. direkt) in die erste Flut oder (z. B. direkt) in einen der ersten Flut zugeordneten Abschnitt der Abgassammelleitung einzuspeisen. Bevorzugt weist die Bypass-Leitung somit (z. B. stromauf des Turbinenrads der Turbine) keine (direkte) Mündung in die zweite Flut und/oder den zweiten Abgasstrom auf. Auf vorteilhafte Weise kann dadurch ein besonders stabiler Betriebspunkt der Turboladereinrichtung erreicht werden.

Zudem oder alternativ kann die Bypass-Leitung ausgebildet und/oder angeordnet sein, vom Verdichter verdichtete Luft der Turbine stromab der Abgasleiteinrichtung und stromauf eines Turbinenrads der Turbine (z. B. der ersten Flut und/oder dem der ersten Flut zugeordneten Abschnitt der Abgassammelleitung) zuzuführen. Aufgrund des großen Druckgefälles (mehr Ladedruck als Gegendruck) kann hierdurch auf vorteilhafte Weise ohne großen Mehraufwand ein zusätzlicher Massenstrom bereitgestellt werden.

Zudem oder alternativ kann über die Bypass-Leitung der ersten Flut (oder dem der ersten Flut zugeordneten Abschnitt der Abgassammelleitung) auch dann vom Verdichter verdichtete Luft zuführbar sein, wenn der erste Abgasstrom mittels der Abgasleiteinrichtung gedrosselt oder blockiert ist. Bevorzugt erfolgt die Lufteinspeisung über die Bypass-Leitung somit stromab der Abgasleiteinrichtung (z. B. stromab dessen Absperrelements). Auch hier kann auf vorteilhafte Weise das Druckgefälle genutzt werden.

Nach einem weiteren Aspekt kann die Bypass-Leitung nur in Richtung der Turbine (und z. B. nicht umgekehrt) von Luft durchströmbar sein. Beispielsweise kann die Bypass-Leitung nur entlang einer Hauptströmrichtung durchströmbar sein, wobei sich diese bevorzugt von dem Verdichter zu der Turbine erstreckt. Zudem oder alternativ kann die Bypass-Leitung ein Rückschlagelement (z. B. ein Rückschlagventil und/oder eine Rückschlagklappe) aufweisen. Bevorzugt ist das Rückschlagelement dabei so angeordnet und/oder ausgebildet, dass die Bypass-Leitung nur in Richtung der Turbine von Luft durchströmbar ist. Auf vorteilhafte Weise kann dadurch verhindert werden, dass Abgas auf die Verdichterseite strömt, wenn beide Fluten geöffnet sind und der Abgasgegendruck größer als der Ladedruck ist (negatives Spülgefälle).

Gemäß einem weiteren Aspekt kann die Bypass-Leitung ein Stellelement (ein Steuer- und/oder Regelventil) aufweisen, mittels dessen bevorzugt ein Luftdurchfluss durch die Bypass-Leitung (z. B. aktiv) einstellbar ist. Das Stellelement kann bspw. ausschließlich wahlweise in den Stellungen "offen" oder (z. B. vollkommen) "geschlossen" einstellbar sein. Bevorzugt weist das Stellelement jedoch darüber hinaus noch weitere Stellungen auf. Beispielsweise kann das Stellelement kontinuierlich oder in mehreren Stufen zwischen einer Offen- und Geschlossenstellung überführbar sein. Auf vorteilhafte Weise kann dadurch der zusätzliche Massenstrom möglichst bedarfsgerecht eingestellt werden.

Nach einem weiteren Aspekt kann die Brennkraftmaschine ferner eine Steuereinrichtung (z. B. ein Steuergerät) aufweisen. Die Steuereinrichtung kann bspw. einen Prozessor und einen Speicher aufweisen, in dem vom Prozessor verarbeitbare Befehle hinterlegt sind.

Gemäß einem weiteren Aspekt kann die Steuereinrichtung eingerichtet (z. B. konfiguriert) sein, (z. B. in einem Teillastbetriebsmodus) die Abgasleiteinrichtung (z. B. deren Absperrelement) zum Einstellen (z. B. Drosseln oder Blockieren) des ersten Abgasstroms und/oder des zweiten Abgasstroms (z. B. automatisch) anzusteuern, vorzugsweise in Abhängigkeit einer Drehzahl, einer Motorlast und/oder eines Abgasvolumenstroms der Brennkraftmaschine. Beispielsweise kann die Steuereinrichtung eingerichtet sein, Steuerbefehle an die Abgasleiteinrichtung auszugeben, die bspw. ein Verstellen der Abgasleiteinrichtung bewirken. Die Steuereinrichtung und die Abgasleiteinrichtung können dabei z. B. über ein oder mehrere Signalleitungen verbunden sein.

In einer Ausführungsform kann die Steuereinrichtung eingerichtet (z. B. konfiguriert) sein, (z. B. in einem bzw. dem Teillastbetriebsmodus) bei einem Vorliegen einer vorbestimmten (z. B. zuvor festgelegten) Auslösebedingung (z. B. falls eine Drehzahl der Brennkraftmaschine unter einen Drehzahlgrenzwert, bspw. unter 1200 U/min, fällt), die Abgasleiteinrichtung (z. B. deren Absperrelement) derart anzusteuern, dass der erste Abgasstrom durch die erste Flut gedrosselt oder blockiert wird, sodass vorzugsweise der zweite Abgasstrom durch die zweite Flut (z. B. gleichzeitig) erhöht wird. Hierbei kann die Steuereinrichtung ausgebildet sein, von einem oder mehreren Sensoren (z. B. Motor- und/oder Fahrzeugsensoren) Sensordaten (z. B. Drehzahldaten, Motorlastdaten und/oder Abgasvolumendaten) zu empfangen und auf Grundlage der empfangenen Sensordaten das Vorliegen oder Nicht-Vorliegen der Auslösebedingung zu bestimmen. Bevorzugt ist die Steuereinrichtung ferner eingerichtet, bei einem Wegfall der vorbestimmten Auslösebedingung (z. B. falls die Drehzahl der Brennkraftmaschine (wieder) über den Drehzahlgrenzwert, bspw. über 1200 U/min, steigt), die Abgasleiteinrichtung derart anzusteuern, dass der erste Abgasstrom durch die erste Flut nicht gedrosselt oder blockiert wird. Auf vorteilhafte Weise kann dadurch die Leistung der Turbine bei niedrigen Durchsätzen deutlich gesteigert werden.

Der Drehzahlgrenzwert kann bspw. 1300 U/min, vorzugsweise 1200 U/min, besonders bevorzugt 1100 U/min sein.

Zudem oder alternativ kann die Steuereinrichtung eingerichtet (z. B. konfiguriert) sein, das Stellelement zum Einstellen des Luftdurchflusses durch die Bypass-Leitung (z. B. abgestimmt auf die Abgasleiteinrichtung oder unabhängig von der Abgasleiteinrichtung) anzusteuern, vorzugsweise in Abhängigkeit einer Drehzahl, einer Motorlast und/oder eines Abgasvolumenstroms der Brennkraftmaschine. Beispielsweise kann die Steuereinrichtung eingerichtet sein, (z. B. in dem Teillastbetriebsmodus) den Luftdurchfluss durch die Bypass-Leitung bei Vorliegen der vorbestimmten Auslösebedingung (z. B. falls die Drehzahl der Brennkraftmaschine unter den Drehzahlgrenzwert, bspw. unter 1200 U/min, fällt) freizugeben und/oder den Luftdurchfluss durch die Bypass-Leitung bei einem Nicht-Vorliegen der Auslösebedingung zu drosseln und/oder zu blockieren.

Nach einem weiteren Aspekt kann die Turbine eine zweiflutige Turbine sein. Beispielsweise kann die Turbine nur die (vorgenannte) erste Flut und die (vorgenannte) zweite Flut aufweisen. Zudem oder alternativ kann die Turbine außer der ersten Flut und der zweiten Flut keine weiteren Fluten aufweisen. Bevorzugt handelt es sich bei der Turbine damit um keine drei- oder mehrflutige Turbine.

Zudem oder alternativ kann die Abgassammelleitung eine einflutige Abgassammelleitung sein. Beispielsweise kann die Abgassammelleitung mehrere Sammelleitungseinlässe, die jeweils mit Ventilauslässen der Brennkraftmaschine fluidisch verbunden sind, und einen gemeinsamen Sammelleitungsauslass, der mit der Turbine fluidisch verbunden ist, aufweisen.

Zudem oder alternativ kann die Abgassammelleitung alle Zylinder der Brennkraftmaschine sowohl mit der ersten Flut als auch mit der zweiten Flut fluidisch verbinden. Beispielsweise können die "mehreren Zylinder" alle Zylinder der Brennkraftmaschine sein.

Zudem oder alternativ kann die Brennkraftmaschine einen Ladeluftkühler zum Kühlen der vom Verdichter verdichteten Luft aufweisen. Beispielsweise kann der Ladeluftkühler in einer, den Verdichter mit den mehreren Zylindern verbindenden Ladeluftleitung angeordnet sein, bspw. stromab des Verdichters und stromauf der mehreren Zylinder.

Ein weiterer unabhängiger Aspekt der vorliegenden Offenbarung betrifft ein Wasserfahrzeug (z. B. ein Boot oder Schiff), aufweisend eine Brennkraftmaschine wie hierin beschrieben. Folglich sollen die vorstehend im Zusammenhang mit der Brennkraftmaschine offenbarten Merkmale auch im Zusammenhang mit dem Wasserfahrzeug offenbart und beanspruchbar sein. Entsprechendes soll auch umgekehrt gelten. Das Wasserfahrzeug kann hierbei bspw. einen Propeller aufweisen, der mit der Brennkraftmaschine trieblich verbunden ist.

Auch wenn sich die hierin beschriebene Brennkraftmaschine in besonderem Maße für einen Einsatz bei Wasserfahrzeugen eignet, so ist die Verwendung der Brennkraftmaschine nicht hierauf beschränkt. Ein weiterer unabhängiger Aspekt der vorliegenden Offenbarung betrifft daher ein Land- bzw. Kraftfahrzeug, vorzugsweise ein Nutzfahrzeug, aufweisend eine Brennkraftmaschine, wie hierin beschrieben. Auch hier sollen die vorstehend im Zusammenhang mit der Brennkraftmaschine offenbarten Merkmale auch im Zusammenhang mit dem Kraftfahrzeug offenbart und beanspruchbar sein. Entsprechendes soll auch umgekehrt gelten.

Ein weiterer unabhängiger Aspekt der vorliegenden Offenbarung betrifft ein Verfahren zum Betreiben einer Brennkraftmaschine, wie hierin beschrieben. Auch hier sollen die vorstehend im Zusammenhang mit der Brennkraftmaschine offenbarten Merkmale auch im Zusammenhang mit dem Verfahren offenbart und beanspruchbar sein. Entsprechendes soll auch umgekehrt gelten.

Das Verfahren weist (z. B. in einem Teillastbetriebsmodus und/oder bei einem Vorliegen einer vorbestimmten Auslösebedingung, bspw. falls eine Drehzahl der Brennkraftmaschine unter einen Drehzahlgrenzwert, bspw. 1200 U/min, fällt) folgende Schritte auf:
- Zusammenführen (z. B. Sammeln) von Abgas aus mehreren Zylindern der Brennkraftmaschine, bspw. mittels einer (z. B. einflutigen) Abgassammelleitung (z. B. einem Abgaskrümmer).
- Zuführen der zusammengeführten (z. B. gesammelten) Abgase (z. B. über die Abgassammelleitung) zu einer ersten Flut und zu einer zweiten Flut einer (z. B. Abgas-)Turbine (z. B. einer Radialturbine) einer (z. B. Abgas-)Turboladereinrichtung der Brennkraftmaschine. Ein Teil der (zuvor) zusammengeführten Abgase strömt dabei als ein erster Abgasstrom durch die erste Flut und ein anderer Teil der (zuvor) zusammengeführten Abgase strömt als ein zweiter Abgasstrom durch die erste Flut. Bevorzugt ist die Turbine, bspw. über eine Welle, mit einem (z. B. Frischluft-)Verdichter (z. B. einem Radialverdichter) der Turboladereinrichtung trieblich gekoppelt.
- Einstellen (z. B. Drosseln oder Blockieren) des ersten Abgasstroms durch die erste Flut, bspw. mittels einer Abgasleiteinrichtung, unabhängig von dem zweiten Abgasstrom durch die zweite Flut, vorzugsweise so, dass sich dadurch eine Strömungsgeschwindigkeit des zweiten Abgasstroms (und somit eine Leistung der Turboladereinrichtung) erhöht. Beispielsweise kann dazu ein Absperrelement (z. B. eine Klappe, ein Schieber und/oder ein Ventil) der Abgasleiteinrichtung geschlossen oder abgesperrt werden. Bevorzugt erfolgt das Einstellen dabei so, dass durch die zweite Flut mehr Abgas als durch die erste Flut strömt.
- Zuführen von, bspw. mittels eines bzw. des Verdichter der Turboladereinrichtung, verdichteter Luft, bspw. über eine Bypass-Leitung unter Umgehung der mehreren Zylinder, zu der Turbine (z. B. zu der ersten Flut), vorzugsweise, um dadurch einen stabilen Betriebspunkt der Turboladereinrichtung unterhalb einer Pumpgrenze der Turboladereinrichtung zu realisieren. Bevorzugt wird die verdichtete Luft dabei direkt und/oder nur in die erste Flut zugeführt, vorzugsweise stromab (oder hinter) der Abgasleiteinrichtung bzw. des Absperrelements.

Im Allgemeinen kann der Begriff "stromab" als "die Strömung hinunter" und/oder "in Richtung weg von der Strömungsquelle" verstanden werden. Entsprechend kann der Begriff "stromauf" als "die Strömung hinauf" bzw. "in Richtung der Strömungsquelle" verstanden werden. Im Bereich des Abgastrakts ist die Strömung dabei auf die Zylinder als Quelle bezogen. Die Strömung bzw. das Abgas strömt somit von den Zylindern durch die Abgassammelleitung zur Turbine, während im Frischlufttrakt die Strömung bzw. die Frischluft von der Umgebung als Quelle (durch den Verdichter) zu den Zylindern der Brennkraftmaschine strömt.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen
- Figur 1:: eine schematische Darstellung einer Brennkraftmaschine gemäß einer Ausführungsform; und
- Figur 2:: ein schematisches Verdichterkennfeld eines Verdichters gemäß einer Ausführungsform.

Die in den Figuren dargestellten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

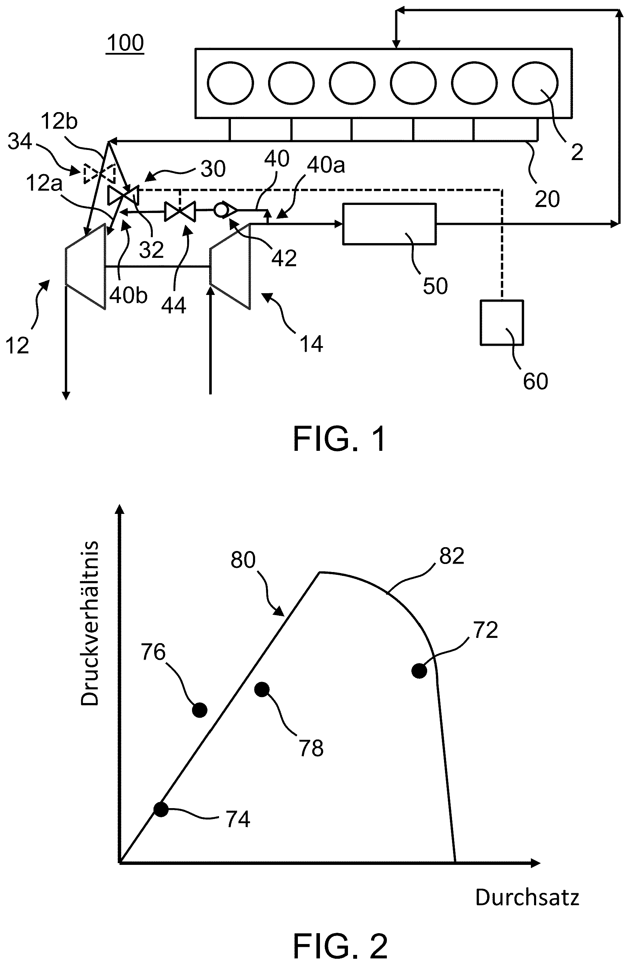

Figur 1 zeigt eine Brennkraftmaschine 100. Bei der Brennkraftmaschine 100 handelt es sich lediglich exemplarisch um eine aufladbare Diesel-Brennkraftmaschine. Die Brennkraftmaschine 100 kann in einem Wasserfahrzeug (nicht dargestellt), bspw. einem Schiff, umfasst sein. Beispielsweise kann die Brennkraftmaschine 100 zum Vortrieb des Wasserfahrzeugs dienen und mit einem Propeller des Wasserfahrzeugs trieblich gekoppelt sein. Grundsätzlich kann die Brennkraftmaschine 100 jedoch auch in einem Kraftfahrzeug (nicht dargestellt) verbaut sein.

Die Brennkraftmaschine 100 kann mehrere, vorliegend bspw. sechs, Zylinder 2 aufweisen. Die Zylinder 2 können entlang einer Längsrichtung beabstandet voneinander angeordnet sein. In jedem der Zylinder 2 kann ein mit einer Kurbelwelle (nicht dargestellt) der Brennkraftmaschine 100 verbundener hin- und hergehender Kolben (nicht dargestellt) aufgenommen sein. Ein Verbrennungszyklus jedes Zylinders 2 kann vier Takte umfassen: einen Einlasstakt, einen Kompressionstakt, einen Expansionstakt und einen Ausschubtakt.

Den Zylindern 2 kann jeweils mindestens ein Einlassventil und mindestens ein Auslassventil zugeordnet sein (nicht dargestellt). Die Einlass- und Auslassventile können mittels eines, in den Figuren nicht näher gezeigten, konventionellen (z. B. variablen) Ventiltriebs betätigbar sein.

Die Brennkraftmaschine 100 kann einen Abgastrakt mit einer Abgassammelleitung 20 aufweisen. Die Abgassammelleitung 20 kann fluidisch mit den Auslassventilen verbunden sein. Die Abgassammelleitung 20 kann ausgebildet sein, das von den Auslassventilen kommende Abgas zusammenzuführen und zu einer Turboladereinrichtung 10 zu leiten. In der Abgassammelleitung 20 können ferner Druckstöße der jeweiligen Zylinder 2 abgebaut werden und der Turboladereinrichtung 10 somit Abgas mit im Wesentlichen konstantem Druck zur Verfügung gestellt werden. Die Abgassammelleitung 10 kann, wie in Figur 1 dargestellt, einflutig ausgebildet sein. Entsprechend kann das Abgas aller Zylinder 2 in einer einzigen bzw. gemeinsamen Abgassammelleitung zusammengeführt und der Turboladereinrichtung 10 zugeführt werden.

Die Turboladereinrichtung 10 kann in an sich bekannter Weise eine Turbine 12 und einen mit der Turbine 12, bspw. über eine Welle, trieblich gekoppelten Verdichter 14 aufweisen. Die Turboladereinrichtung 10 kann ausgebildet sein, einen Teil der Energie des Motorabgases mittels einer Turbine 12 und einem Verdichter 14 zu nutzen, um eine größere Luftmenge in die Zylinder 2 einströmen zu lassen. Hierzu kann der Turbine 12 über die Abgassammelleitung 20 das gesammelte bzw. zusammengeführte Abgas zuführbar sein. Die Turbine 12 kann ein, z. B. drehbar gelagertes, Turbinenrad aufweisen. Das Turbinenrad kann von einem Turbinengehäuse umgeben sein und/oder in einem Turbinenradraum des Turbinengehäuses aufgenommen sein. Durch Anströmen des Turbinenrads mit dem Abgas, kann das Turbinenrad in an sich bekannter Weise in eine Drehbewegung versetzbar sein, welche, bspw. über die Welle an den Verdichter 14 übertragbar ist, um ein Verdichterrad des Verdichter 14 anzutreiben. Der somit von der Turbine 12 antreibbare Verdichter 14, kann ausgebildet sein, (atmosphärische) Frischluft zu verdichten und über eine Ladeluftleitung entlang der in den Figuren gezeigten Pfeilen den Zylindern 2 der Brennkraftmaschine 100 zuzuführen. Auf dem Weg zwischen dem Verdichter 14 der Turboladereinrichtung 10 und den Zylindern 2 kann ferner ein Ladeluftkühler 50 angeordnet sein, um die verdichtete Frischluft bzw. Ladeluft zu kühlen.

Die vorliegende Brennkraftmaschine 100 zeichnet sich dabei dadurch aus, dass die Turbine 12 eine erste Flut 12a und eine zweite Flut 12b aufweist. Beispielsweise kann die Turbine 12, wie in Figur 1 dargestellt, eine zweiflutige Turbine sein. Die erste Flut 12a und die zweite Flut 12b können durch eine Trennwand (z. B. des Turbinengehäuses) voneinander getrennt sein und/oder parallel zueinander verlaufen. Über die erste Flut 12b kann ein erster Fluteneinlass der Turbine 12 mit einem in den Turbinenradraum mündenden ersten Flutenauslass fluidisch verbunden sein. Ebenso kann über die zweite Flut 12b ein zweiter Fluteneinlass der Turbine 12 mit einem ebenfalls in den Turbinenradraum mündenden zweiten Flutenauslass fluidisch verbunden sein. Bevorzugt sind der erste Fluteneinlass und der zweite Fluteneinlass voneinander getrennt. Zudem oder alternativ können auch der erste Flutenauslass und der zweite Flutenauslass voneinander getrennt sein. Der erste und/oder zweite Flutenauslass können düsenförmig ausgebildet sein.

Die erste Flut 12a und die zweite Flut 12b können parallel zueinander angeordnet sein. In der ersten Flut 12a kann ein erster Abgasstrom führbar sein. In der zweiten Flut 12b kann ein zweiter Abgasstrom führbar sein. Bevorzugt sind der erste und der zweite Abgasstrom im Bereich zwischen dem Turbinenradraum und den jeweiligen Fluteneinlässen fluidisch voneinander getrennt. Der erste Abgasstrom kann über den ersten Flutenauslass einer ersten Turbinenhälfte des Turbinenrads zugeordnet sein. Entsprechend kann der zweite Abgasstrom über den zweiten Flutenauslass einer anderen Turbinenhälfte des Turbinenrads zugeordnet sein.

Über die Abgassammelleitung 20 sind hierbei mehrere, vorliegend bspw. alle, Zylinder 2 der Brennkraftmaschine 100 sowohl mit der ersten Flut 12a als auch mit der zweiten Flut 12b fluidisch verbunden. Bevorzugt ist dabei jeder der mehreren Zylinder 2 über die Abgassammelleitung 20 sowohl mit der ersten Flut 12a als auch mit der zweiten Flut 12b fluidisch verbunden. Beispielsweise kann die Abgassammelleitung 20 ausgebildet sein, Abgase aus allen der mehreren Zylinder 2 zusammenzuführen und die zusammengeführten Abgase (z. B. gleichzeitig) dem ersten Fluteneinlass und dem zweiten Fluteneinlass zuzuführen. Hierbei können der erste und zweite Fluteneinlass, bspw. über eine entsprechende Flanschverbindung, parallel an einen gemeinsamen Sammelleitungsauslass der Abgassammelleitung 20 angeschlossen sein. Alternativ kann sich ein der Turbine 12 zugewandtes Ende der Abgassammelleitung 20 auch in zwei Abschnitte verzweigen. Jeder dieser Abschnitte kann dabei einer der beiden Fluten zugeordnet sein und/oder einen jeweiligen Sammelleitungsauslass aufweisen, wobei bevorzugt einer der Sammelleitungsauslässe mit dem ersten Fluteneinlass und der andere der Sammelleitungsauslässe mit dem zweiten Fluteneinlass fluidisch verbunden ist.

Die Brennkraftmaschine 100 weist ferner eine Abgasleiteinrichtung 30 auf, mittels derer ein erster Abgasstrom durch die erste Flut 12a unabhängig von einem zweiten Abgasstrom durch die zweite Flut 12a einstellbar ist. Beispielsweise kann die Abgasleiteinrichtung 30 dazu, wie in Figur 1 dargestellt, ein Absperrelement 32, bspw. ein Absperrventil, zum Drosseln und/oder Blockieren des ersten Abgasstroms aufweisen. Das Absperrelement 32 kann dabei in der ersten Flut 12a oder stromauf zur ersten Flut 12a, z. B. stromauf des ersten Fluteneinlasses in dem der ersten Flut 12a zugeordneten Abschnitt der Abgassammelleitung 20, angeordnet sein. In der in Figur 1 dargestellten Ausführungsform, ist die zweite Flut 12b nicht drosselbar oder blockierbar. Beispielsweise kann mittels der Abgasleiteinrichtung 30 bzw. mittels des ersten Absperrelements 32 nur der erste Abgasstrom drosselbar oder blockierbar sein. Grundsätzlich kann die Abgasleiteinrichtung 30 jedoch auch ein (optionales) weiteres Absperrelement 34 zum Drosseln und/oder Blockieren des zweiten Abgasstroms aufweisen. Bevorzugt ist das Absperrelement 32 dabei unabhängig von dem weiteren Absperrelement 34 betätigbar.

Die Abgasleiteinrichtung 30, insbesondere deren Absperrelement 32, kann über eine Steuereinrichtung 60 der Brennkraftmaschine 100 einstellbar sein. Beispielsweise können die Steuereinrichtung 60 und die Abgasleiteinrichtung 30 bzw. deren Absperrelement 32 über eine Signalleitung (gestrichelte Linie) verbunden sein. Durch Ansteuern der Abgasleiteinrichtung 30 bzw. deren Absperrelements 32 kann somit der erste Abgasstrom - unabhängig von dem zweiten Abgasstrom durch die zweite Flut 12a - drosselbar oder blockierbar sein. Bevorzugt erfolgt das Ansteuern der Abgasleiteinrichtung 30 hierbei automatisch, bspw. in Abhängigkeit einer (z. B. sensorisch erfassten) Drehzahl, einer Motorlast und/oder eines Abgasvolumenstroms der Brennkraftmaschine 100.

Beispielsweise kann die Steuereinrichtung 60 eingerichtet sein, die Abgasleiteinrichtung 30 derart anzusteuern, dass in einem (unteren) Drehzahlbereich zwischen 600 bis 1200 U/min nur der erste Abgasstrom blockiert bzw. abgeschaltet wird, bspw. durch Absperren und/oder Schließen des Absperrelements 32. Bevorzugt wird dadurch mehr Abgas der zweiten Flut 12b zugeführt, wodurch sich dort eine Strömungsgeschwindigkeit des zweiten Abgasstroms erhöht. Hierdurch kann auf vorteilhafte Weise die Leistung der Turbine 12 bei niedrigen Durchsätzen deutlich gesteigert werden, worauf später im Zusammenhang mit Figur 2 nochmals im Detail eingegangen wird. Steigt die Drehzahl der Brennkraftmaschine 100 über 1200 U/min kann die Steuereinrichtung 60 ferner eingerichtet sein, die Abgasleiteinrichtung 30 derart anzusteuern, dass die erste Flut freigegeben wird bzw. das Absperrelement 32 geöffnet wird. Neben der vorstehend beschriebenen Steuerung auf Grundlage der Drehzahl können zudem oder alternativ auch weitere Betriebsparameter, bspw. eine Motorlast und/oder ein Abgasvolumenstrom, berücksichtigt werden.

Ohne weitere Zusatzmaßnahmen bestünde jedoch die Gefahr, dass sich der Verdichter 14 bei niedrigen Drehzahlen außerhalb der Pumpgrenze befinden könnte, was einem zulässigen Betrieb entgegenstehen könnte. Um den Betriebspunkt in den regulären Arbeitsbereich zu schieben, ist deshalb vorgesehen, einen zusätzlichen Massenstrom zu schaffen. Dies könnte prinzipiell über eine entsprechende Ausführung der Nockenwelle erfolgen, da bei blockiertem Absperrelement 32 jedoch in der Regel ein höherer Abgasgegendruck als Ladedruck vorliegt, kommt ein Nockenwellenansatz nicht in Betracht.

Stattdessen weist die Brennkraftmaschine 100 ferner eine Bypass-Leitung 40 auf, über die von dem Verdichter 14 verdichtete Luft unter Umgehung der mehreren Zylinder 2 der Turbine 12 zuführbar ist. Beispielsweise kann die Bypass-Leitung 40 (ausschließlich) einen Bypass-Einlass 40a und (ausschließlich) einen Bypass-Auslass 40b aufweisen. Der Bypass-Einlass 40a und der Bypass-Auslass 40b können über eine Rohr- und/oder Schlauchleitung miteinander verbunden sein.

Der Bypass-Einlass 40a kann direkt mit dem Verdichter 14 oder mit der Ladeluftleitung fluidisch verbunden sein. Beispielsweise kann der Bypass-Einlass 40a, wie in Figur 1 dargestellt, mit einem Bereich der Ladeluftleitung zwischen dem Verdichter 14 und dem Ladeluftkühler 50, d. h. einem Bereich der Ladeluftleitung stromauf des Verdichters 14 und stromab des Ladeluftkühlers 50, fluidisch verbunden sein. In den Bypass-Einlass 40a kann somit ein Teil der vom Verdichter 14 verdichteten Luft einströmen.

Der Bypass-Auslass 40b kann direkt mit der ersten Flut 12a oder mit dem der ersten Flut 12a zugeordneten Abschnitt der Abgassammelleitung 20 fluidisch verbunden sein. Beispielsweise kann der Bypass-Auslass 40b stromab des Absperrelements 32 in die erste Flut oder in den, der ersten Flut 12a zugeordneten Abschnitt der Abgassammelleitung 20 münden. Entsprechend kann die Bypass-Leitung 40 so angeordnet sein, dass der ersten Flut 12a auch dann vom Verdichter 14 verdichtete Luft zuführbar ist, wenn der erste Abgasstrom mittels der Abgasleiteinrichtung 30 bzw. mittels des Absperrelements 32 blockiert ist. Mit anderen Worten kann die Bypass-Leitung 40 von nach dem Verdichter 14 hinter das Absperrelement 32 der verschlossenen (ersten) Flut in der Turbine 12 geleitet werden. Auf vorteilhafte Weise kann dadurch ein stabiler Betriebspunkt der Turboladereinrichtung 10 unterhalb einer Pumpgrenze der Turboladereinrichtung 10 realisiert werden, worauf später im Zusammenhang mit Figur 2 nochmals im Detail eingegangen wird.

Um zu verhindern, dass Abgas auf die Verdichterseite strömt, wenn die erste und zweite Flut 12a und 12b geöffnet sind und der Abgasgegendruck größer als der Ladedruck ist (negatives Spülgefälle), weist die Bypass-Leitung 40 ferner ein Rückschlagelement 42 auf. Beispielsweise kann das Rückschlagelement 42 als Rückschlagventil und/oder Rückschlagklappe ausgebildet sein. Bevorzugt lässt das Rückschlagelement 42 ein Durchströmen der Bypass-Leitung 40 nur in Richtung der Turbine 12 zu und/oder blockiert ein Durchströmen der Bypass-Leitung 40 in Richtung des Verdichters 14.

Für eine möglichst bedarfsgerechte Steuerung des zusätzlichen Massenstroms durch die Bypass-Leitung 40 kann diese auch ein Stellelement 44 aufweisen, mittels dessen ein Luftdurchfluss durch die Bypass-Leitung 40 einstellbar ist. Beispielsweise kann die Bypass-Leitung 40 über das Stellelement 44 (komplett bzw. in beide Richtungen) absperrbar sein. Das Stellelement 44 kann bspw. in Form eines Steuer- und/oder Regelventils ausgebildet sein. Das Stellelement 44 kann über die Steuereinrichtung 60 (aktiv) verstellbar sein. Beispielsweise kann die Steuereinrichtung 60 ferner eingerichtet sein, das Stellelement 44 zum Einstellen des Luftdurchflusses durch die Bypass-Leitung 40 anzusteuern, vorzugsweise in Abhängigkeit einer Drehzahl, einer Motorlast und/oder eines Abgasvolumenstroms der Brennkraftmaschine 100. Die Steuereinrichtung 60 kann dazu über eine entsprechende Signalleitung (gestrichelte Linie) mit dem Stellelement 44 verbunden sein. Grundsätzlich kann die Ansteuerung des Stellelements 44 dabei unabhängig von der Ansteuerung der Abgasleiteinrichtung 30 erfolgen. Bevorzugt erfolgt das Einstellen des Luftdurchflusses durch die Bypass-Leitung 40 dabei abgestimmt auf die Stellung der Abgasleiteinrichtung 30. Beispielsweise kann die Steuereinrichtung 60 eingerichtet sein, das Stellelement 44 zu schließen, wenn das Absperrelement 32 der Abgasleiteinrichtung 30 geöffnet wird, und freizugeben, wenn das Absperrelement 32 der Abgasleiteinrichtung 30 geschlossen wird.

Figur 2 zeigt ein Verdichterkennfeld eines Verdichters 14 gemäß einer Ausführungsform. Das Verdichterkennfeld beschreibt das Betriebsverhalten des Verdichters 12, wobei es sich vorliegend um einen zweiflutigen Verdichter handelt. Auf der senkrechten (Y-)Achse ist das Druckverhältnis in einer willkürlichen Einheit aufgetragen. Auf der waagrechten (X-)Achse ist der Durchsatz in einer willkürlichen Einheit aufgetragen. Im Verdichterkennfeld sind die Pumpgrenze 80 als Linie für den jeweils minimalen Durchsatz sowie eine Verdichterkennlinie 82 für eine Verdichterdrehzahl eingezeichnet. Betriebspunkt 72 markiert einen beispielhaften Nennleistungspunkt für den Verdichter 12. Werden beide Fluten des Verdichters 12 beaufschlagt, so erzeugt dies bei niedrigen Durchsätzen nur sehr wenig Leistung (vgl. Betriebspunkt 74).

Durch Blockieren einer der beiden Fluten und Beaufschlagen nur einer der beiden Fluten mit dem gesamten Abgas, kann auch bei niedrigen Drehzahlen bzw. Durchsätzen die Leistung der Turbine 12 und damit des Verdichters 14 deutlich gesteigert werden, vgl. Betriebspunkt 76. Allerdings besteht hier die Gefahr, dass der Betriebspunkt oberhalb der Pumpgrenze 80 liegt, was allerdings durch das Vorsehen einer entsprechenden Bypass-Leitung 40 umgegangen werden kann, sodass letztlich ein stabiler Betriebspunkt, vgl. Betriebspunkt 78, sichergestellt werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 2: Zylinder
- 10: Turboladereinrichtung
- 12: Turbine
- 12a: Erste Flut
- 12b: Zweite Flut
- 14: Verdichter
- 20: Abgassammelleitung
- 30: Abgasleiteinrichtung
- 32: Absperrelement
- 34: Weiteres Absperrelement
- 40: Bypass-Leitung
- 40a: Bypass-Einlass
- 40b: Bypass-Auslass
- 42: Rückschlagelement
- 44: Stellelement
- 60: Steuereinrichtung
- 72, 74 76: Betriebspunkte
- 80: Pumpgrenze
- 82: Verdichterkennlinie
- 100: Brennkraftmaschine

## Patentansprüche

1. Brennkraftmaschine (100), vorzugsweise für ein Wasserfahrzeug, aufweisend:
eine Turboladereinrichtung (10), die eine Turbine (12) und einen mit der Turbine (12) trieblich gekoppelten Verdichter (14) aufweist, wobei die Turbine (12) eine erste Flut (12a) und eine zweite Flut (12b) aufweist;
eine, vorzugsweise einflutige, Abgassammelleitung (20), die die erste Flut (12a) und die zweite Flut (12b) mit mehreren Zylindern (2) der Brennkraftmaschine (100) miteinander fluidisch verbindet;
eine Abgasleiteinrichtung (30), mittels derer ein erster Abgasstrom durch die erste Flut (12a) unabhängig von einem zweiten Abgasstrom durch die zweite Flut (12a) einstellbar ist, vorzugsweise so, dass mittels der Abgasleiteinrichtung (30) nur der erste Abgasstrom drosselbar oder blockierbar ist, um eine Strömungsgeschwindigkeit des zweiten Abgasstroms und somit eine Leistung der Turboladereinrichtung (10) zu erhöhen;
eine, vorzugsweise absperrbare, Bypass-Leitung (40), über die von dem Verdichter (14) verdichtete Luft unter Umgehung der mehreren Zylinder (2) der Turbine (12), vorzugsweise der ersten Flut (12a), zuführbar ist, vorzugsweise, um dadurch einen stabilen Betriebspunkt der Turboladereinrichtung (10) unterhalb einer Pumpgrenze der Turboladereinrichtung (10) zu realisieren.

2. Brennkraftmaschine (100) nach Anspruch 1, wobei:
jeder der mehreren Zylinder (2) über die Abgassammelleitung (20) sowohl mit der erste Flut (12a) als auch mit der zweiten Flut (12b) fluidisch verbunden ist; und/oder
die Abgassammelleitung (20) ausgebildet ist, Abgase aus allen der mehreren Zylinder (2) zusammenzuführen und die zusammengeführten Abgase der ersten und zweiten Flut (12a, 12b) zuzuführen.

3. Brennkraftmaschine (100) nach Anspruch 1 oder 2, wobei:
die Abgasleiteinrichtung (30) ein Absperrelement (32) zum Drosseln und/oder Blockieren des ersten Abgasstroms aufweist, wobei vorzugsweise:
das Absperrelement (32) eine Klappe, einen Schieber und/oder ein Ventil aufweist; und/oder
das Absperrelement (32) in der ersten Flut (12a) oder stromauf zur ersten Flut (12a), vorzugsweise unmittelbar an einem Einlass der ersten Flut (12a), angeordnet ist.

4. Brennkraftmaschine (100) nach Anspruch 3, wobei:
die Abgasleiteinrichtung (30) keine weiteren Absperrelemente aufweist und/oder der zweite Abgasstrom nicht mittels eines weiteren Absperrelements drosselbar oder blockierbar ist; oder
die Abgasleiteinrichtung (30) ein weiteres Absperrelement (34) zum Drosseln und/oder Blockieren des zweiten Abgasstroms aufweist, wobei das Absperrelement (32) und das weitere Absperrelement (34) unabhängig voneinander betätigbar sind.

5. Brennkraftmaschine (100) nach einem der vorherigen Ansprüche, wobei die Bypass-Leitung (40):
einen Bypass-Einlass (40a) aufweist, der mit dem Verdichter (14) oder mit einer stromauf des Verdichters angeordneten Ladeluftleitung der Brennkraftmaschine (100), vorzugsweise mit einem Bereich der Ladeluftleitung zwischen dem Verdichter und einem Ladeluftkühler (50) der Brennkraftmaschine (100), fluidisch verbunden ist; und/oder
einen Bypass-Auslass (40b) aufweist, der, vorzugsweise stromab der Abgasleiteinrichtung (30), mit der ersten Flut (12a) oder mit einem der ersten Flut (12a) zugeordneten Abschnitt der Abgassammelleitung (20) fluidisch verbunden ist.

6. Brennkraftmaschine (100) nach einem der vorherigen Ansprüche, wobei:
die Bypass-Leitung (40) angeordnet ist, vom Verdichter (14) verdichtete Luft ausschließlich in den ersten Abgasstrom einzuleiten; und/oder
die Bypass-Leitung (40) angeordnet ist, vom Verdichter (14) verdichtete Luft der Turbine (12) stromab der Abgasleiteinrichtung (30) und stromauf eines Turbinenrads der Turbine (12) zuzuführen; und/oder
über die Bypass-Leitung (40) der ersten Flut (12a) auch dann vom Verdichter (14) verdichtete Luft zuführbar ist, wenn der erste Abgasstrom mittels der Abgasleiteinrichtung (30) gedrosselt oder blockiert ist.

7. Brennkraftmaschine (100) nach einem der vorherigen Ansprüche, wobei:
die Bypass-Leitung (40) nur in Richtung der Turbine (12) von Luft durchströmbar ist und/oder ein Rückschlagelement (42), vorzugsweise ein Rückschlagventil und/oder eine Rückschlagklappe, aufweist.

8. Brennkraftmaschine (100) nach einem der vorherigen Ansprüche, wobei die Bypass-Leitung (40):
ein Stellelement (44), vorzugsweise ein Steuer- und/oder Regelventil, aufweist, mittels dessen ein Luftdurchfluss durch die Bypass-Leitung (40) einstellbar ist.

9. Brennkraftmaschine (100) nach einem der vorherigen Ansprüche, ferner aufweisend:
eine Steuereinrichtung (60), die eingerichtet ist, die Abgasleiteinrichtung (30) zum Einstellen, vorzugsweise Drosseln oder Blockieren, des ersten Abgasstroms anzusteuern, vorzugsweise in Abhängigkeit einer Drehzahl, einer Motorlast und/oder eines Abgasvolumenstroms der Brennkraftmaschine (100).

10. Brennkraftmaschine (100) nach Anspruch 9, wobei:
die Steuereinrichtung (60) eingerichtet ist, bei einem Vorliegen einer vorbestimmten Auslösebedingung, vorzugsweise falls eine Drehzahl der Brennkraftmaschine (100) unter einen Drehzahlgrenzwert, bspw. 1200 U/min, fällt, die Abgasleiteinrichtung (30) derart anzusteuern, dass der erste Abgasstrom durch die erste Flut (12a) gedrosselt oder blockiert wird, sodass vorzugsweise der zweite Abgasstrom durch die zweite Flut (12b) erhöht wird; und vorzugsweise:
bei einem Wegfall der vorbestimmten Auslösebedingung, die Abgasleiteinrichtung (30) derart anzusteuern, dass der erste Abgasstrom durch die erste Flut (12a) nicht gedrosselt oder blockiert wird.

11. Brennkraftmaschine (100) nach Anspruch 9 oder 10, falls Anspruch 9 oder 10 auf Anspruch 8 rückbezogen ist, wobei:
die Steuereinrichtung (60) ferner eingerichtet ist, das Stellelement (44) zum Einstellen des Luftdurchflusses durch die Bypass-Leitung (40), vorzugsweise abgestimmt auf die Abgasleiteinrichtung (30), anzusteuern, vorzugsweise in Abhängigkeit einer Drehzahl, einer Motorlast und/oder eines Abgasvolumenstroms der Brennkraftmaschine (100).

12. Brennkraftmaschine (100) nach einem der vorherigen Ansprüche, wobei:
die Turbine (12) eine zweiflutige Turbine ist und/oder außer der ersten und zweiten Flut (12a, 12b) keine weiteren Fluten aufweist; und/oder
die Abgassammelleitung (20) eine einflutige Abgassammelleitung ist und/oder alle Zylinder (2) der Brennkraftmaschine (100) sowohl mit der ersten Flut (12a) als auch mit der zweiten Flut (12b) fluidisch verbindet; und/oder
die Brennkraftmaschine (100) einen Ladeluftkühler (50) zum Kühlen der vom Verdichter (14) verdichteten Luft aufweist.

13. Wasserfahrzeug (100), vorzugsweise Schiff, aufweisend eine Brennkraftmaschine (100) nach einem der vorherigen Ansprüche.

14. Kraftfahrzeug (100), vorzugsweise Nutzfahrzeug, aufweisend eine Brennkraftmaschine (100) nach einem der Ansprüche 1 bis 12.

15. Verfahren zum Betreiben einer Brennkraftmaschine (100) nach einem der Ansprüche 1 bis 12, wobei das Verfahren aufweist:
Zusammenführen von Abgas aus mehreren Zylindern (2) der Brennkraftmaschine (100) mittels einer, vorzugsweise einflutigen, Abgassammelleitung (20);
Zuführen der zusammengeführten Abgase über die Abgassammelleitung (20) zu einer ersten Flut (12a) und zu einer zweiten Flut (12b) einer Turbine (12) einer Turboladereinrichtung (10) der Brennkraftmaschine (100), wobei ein Teil der zusammengeführten Abgase als ein erster Abgasstrom durch die erste Flut (12a) strömt und ein anderer Teil der zusammengeführten Abgase als ein zweiter Abgasstrom durch die erste Flut (12a) strömt;
Einstellen, vorzugsweise Drosseln oder Blockieren, des ersten Abgasstroms durch die erste Flut (12a) mittels einer Abgasleiteinrichtung (30) unabhängig von dem zweiten Abgasstrom durch die zweite Flut (12a), vorzugsweise so, dass sich dadurch eine Strömungsgeschwindigkeit des zweiten Abgasstroms und somit eine Leistung der Turboladereinrichtung (10) erhöht; und
Zuführen von mittels eines Verdichters (14) der Turboladereinrichtung (10) verdichteter Luft über eine Bypass-Leitung (40) unter Umgehung der mehreren Zylinder (2) zu der Turbine (12), vorzugsweise zu der ersten Flut (12a), vorzugsweise, um dadurch einen stabilen Betriebspunkt der Turboladereinrichtung (10) unterhalb einer Pumpgrenze der Turboladereinrichtung (10) zu realisieren.
